# EUROPÄISCHE PATENTSCHRIFT

(11) **EP 2 434 241 B1**
(45) Veröffentlichungstag und Bekanntmachung des Hinweises auf die Patenterteilung: **27.11.2013**
(21) Anmeldenummer: 10010140.1
(22) Anmeldetag: 22.09.2010
(51) Int. Cl.: F27B 7/38, F27D 15/02, B65G 25/06, F26B 17/26, F26B 15/12, F27D 99/00

(54) **Verfahren und Einrichtung einer Dichtung zum Kühlen einer auf einem Förderrost liegenden Schüttgutschicht**
Method and device of a seal for cooling a bulk good layer lying on a supply grid
Procédé et dispositif d'un joint pour refroidir une couche de produits en vrac se trouvant sur une grille de transport

(43) Veröffentlichungstag der Anmeldung: 28.03.2012
(73) Patentinhaber: Janzer, Michael, 30916 Isernhagen (DE)
(72) Erfinder: Janzer, Michael, 30916 Isernhagen (DE)

(56) Entgegenhaltungen:
- EP-A1- 1 887 302
- WO-A1-2009/087010

## Beschreibung

Die vorliegende Erfindung betrifft ein Verfahren und Einrichtung zum Aufbau einer durchfalffreien Dichtung zwischen den in Förderrichtung vor- und zurückgehenden Rostbahnen eines Kühlrostes.

### Aufgabe der Erfindung.

Der in den Patentansprüchen 1 und 19 angegebenen Erfindung liegen folgende Probleme zugrunde:
Bei den sogenannten Walking-Floor-Kühlern, bei denen mehrere Rostbahnen (1) parallel in Förderrichtung angeordnet sind, entsteht zwischen den zur Förderung vor-und zurückgehenden Bahnen ein Bewegungsspalt (10). Dieser Bewegungsspalt (10) unterliegt einer erheblichen maßlichen Schwankung aufgrund von Fertigungs- und Montagetoleranzen einerseits und Wärrneausdehnungen der Rostbreiten aufgrund der Wärmeeinwirkung seitens des zu kühlenden Schüttguts andererseits. Das Prinzip des Walking-Floor-Kühlers erfordert Rostbahnen (1), die sich im wesentlichen über die gesamte Kühlerlänge erstrecken, mit Ausnahme eines eventuellen Festrosts im Einlaufbereich. Eine Verkürzung der jeweiligen Rostbahnen (1) wäre sonst nur über mehrere hintereinander geschaltete und hönenversetzte Roste möglich, was aber zu mehr Antriebseinheiten und mehr Bauhöhe und somit höheren Kosten führen würde.

Eine Parallelität der Rostbahnen (1) über 25 m und mehr Länge läßt sich nicht ohne erheblichen Bearbeitungsaufwand oder erhebliche Hinnahme von Toleranzen realisieren. Die Wärmeausdehnungen verlaufen unterschiedlich, sowohl über die Rostbahnlänge als auch die Kühlerbreite, aufgrund des hohen Temperaturgradienten in der Schüttung von üblicherweise 1400°C am Kühleranfang bis unter 100°C am Kübierende. Die Bewegungsspalte (10) zwischen den Rostbahnen (1) verändern sich entsprechend unterschiedlich und stellen hohe Anforderungen an die Dichtung, diese zu kompensieren, ohne zu Rostdurchfall und Verschleiß zuführen.

Da diese Art Kühler bislang keine Austragsorgane unterhalb der Rostoberfläche (11) für anfallenden Rostdurchfall besitzt, ist die mechanische Dichtigkeit dieser Längsdichtungen unbedingt erforderlich, um die Verfügbarkeit des Kühlers zu gewährleisten. Eine weitere Verschleißquelle liegt in der Lagerung der beweglichen Rostbahnen (1), die zu einem Absinken der Rostbahnen führen kann. Daher muß die Dichtung auch auftretende vertikale Bewegungsspalte aufnehmen bzw. kompensieren. Bei Relativbewegungen der Rostbahnen (1) entsteht zwischen den Rostbahnen (8, 9) eine mechanische Zerkleinerung des Schüttguts Dieser entstehende Feinanteil sowie der bereits bestehende Feinanteil im Schüttgut, reibt sich in kleinste Bewegungsspalte hinein und verursacht dabei erheblichen Verschleiß.

### Stand der Technik:

Aus der Patentschrift EP 1 509 737 sind Labyrinthdichtungen bekannt. Die Fig. 6 zeigt eine feststehende Rinne 32 mit Wänden 33, die mit Material gefüllt ist und in der bewegliche Leisten sich vor- und zurückbewegen. Der Nachteil dieser Dichtung ist, dass eine derartige ständig schleißende Dichtung erhebliche Antriebsleistung und häufigen Wartungsaufwand erfordert, der zudem ein komplettes Säubern des Rostes zu Wartungszecken erfordert.

Die Dichtung gemäß Fig. 10 besteht aus einer feststehenden durchgehenden Halterung 48, auf der ein Dichtprofil 47 sitzt. Die Dichtung ist rein mechanischer Art und soll insbesondere Dichtigkeit zu den Nachbarbahnen gewährleisten. Der Nachteil dieser Dichtung ist, dass die Halterung mit dem Dichtprofiil unterhalb des Rostes stationär befestigt ist und nur entsprechend grob zur Rostoberfläche ausgerichtet werden kann und sich bei einem Absinken der Bahnen durch allgemeinen mechanischen Verschleiß der Spalt vergrößert. Ein weiterer Nachteil ist, dass keine pneumatische Säuberung erfolgen kann, da hier explizit eine völlige Dichtigkeit erzielt werden soll. Ein weiterer Nachteil ist, dass die Dichtung keine Wärmeausdehnungen der Rostbahnen aufnehmen kann.

Aus der Patentanmeldung EP 1 992 897 ist eine Dichtung bekannt, die aus einem schrägen Schlitz und einer folgenden siphonartigen Krümmung besteht, der Schüttgut vor dem Durchfall festhält. Gleichzeitig soll der Spalt als Belüftungsspalt dienen. Ein Nachteil ist, dass eine derartige Ausgestaltung eine Doppelfunktion aber nur sehr eingeschränkt zuläßt, nämlich nur dann, wenn der Spalt in einem sehr engen Toleranzbereich gehalten werden kann. Aus der Praxis ist bekannt, das eine derartige mechanisch-pneumatische Dichtung nur bei einem Spalt zwischen 1 und 3 mm funktioniert. Bei kleinerer Spaltbreite setzt sich der Spalt zu und der erforderliche Druck für die Kühlluft nimmt stark zu. Größere Spalte können erfahrungsgemäß nicht mehr pneumatisch sauber gehalten werden. Daher kann diese Art Dichtung weder Fertigungs- und Montagetoleranzen noch Wärmeausdehnungen zuverlässig dichten. Ein weiterer Nachteil ist, dass der Dichtspalt nicht einstellbar ist. Ein weiterer Nachteil ist, dass der Dichtspalt keine Höhendifferenzen aufgrund von Fertigungs- und Montagetoleranzen oder unterschiedlichem Verschleiß an der Rostoberfläche ausgleichen kann.

### Zusammenfassung der Erfindung;

Es ist die Aufgabe der vorliegenden Erfindung, eine Dichtung und ein Verfahren zu schaffen, mit dem eine Abdichtung zwischen den vor- und zurückgehenden Rostbahnen (1) die horizontalen und vertikalen Abstände, die durch unvermeidliche Fertigungs- und Montagetoleranzen entstehen, als auch die Wärmeausdehnungen der Rostbahnen (1), die den Dichtspalt (5) bei Wärmeeintrag verkleinern, erreicht wird, ohne Verschlechterung der Dichtigkeit durch Verschleiß oder Wärmeeintrag. Die Dichtung funktioniert sowohl als mechanische Labyrinthdichtung, deren Elemente von der Dichtleiste (3) geschützt werden und als pneumatische Dichtung oder auch Ausblasdichtung genannt, also dem Sauberhalten mittels der üblichen Kühlluft unterhalb der Rostbahnen (1) durch justierbare, enge Ausblasspalte (7) zwischen Dichtleiste (3) und Rostoberfläche (11).

Diese Aufgabe ist erfindungsgemäß durch die in Anspruch 1 und 19 beschriebenen Merkmale gelöst.

Als Dichtung wird einseitig an einer Rostbahn (8) ein über die Rostoberfläche (11) ragendes Labyrinthprofil (2) befestigt, welches von einer Dichtleiste (3), die an der parallel verlaufenden Rostbahn (9), zwischen denen sich der Dichtspalt (5) einstellt, so befestigt ist, dass der horizontale Dichtspalt (5) unterhalb der Dichtleiste (3) zwischen dem Labyrinthprofil (2) so groß ist, dass alle horizontalen Toleranzen und Wärmeausdehnungen ohne mechanische Berührung aufgenommen werden können. Gleichzeitig wird der vertikale Dichtspalt (6) zwischen dem Labyrinthprofil (2) und der Dichtleiste (3) sowie der Ausblasspalt (7) zwischen der Dichtleiste (3) und der Rostoberfläche (11) so klein gehalten, dass eine pneumatische Säuberung den Feinanteil ausblasen kann. Dabei ist der Dichtspalt (5), also der horizontale Spalt zwischen dem Labyrinthprofil (2) und der Dichtleiste (3) mindestens 2 mal so groß wie der vertikale Dichtspalt (6) zwischen dem Labyrinthprofil (2) und der Dichtleiste (3). Außerdem ist der Dichtspalt (5) S für Wärmeausdehnungen zwischen dem Labyrinthprofil (2) und der Dichtleiste (3) nach der Formel S = B / 1m * 2 mm, wobei S der Spalt in mm, B die Rostbahnbreite in m ist, zu bemessen

Um die vertikalen Toleranzen auszugleichen, ist die gesamte Dichtung, also das Labyrinthprofil (2) als auch die Dichtleiste (3), jeweils direkt an den Rostbahnen (1) befestigt. Außerdem sind die aus mehreren Segmenten bestehenden Labyrinthprofile (2) und Befestigungsprofile (4) jeweils in der Höhe einstellbar.

Eine besonders vorteilhafte Ausgestaltung der vorliegenden Erfindung wird dadurch geschaffen, dass das Labyrinthprofil (2) als auch die Dichtleiste (3) jeweils direkt an den Rostbahnen (1) befestigt sind und jeweils unabhängig voneinander in der Höhe einstellbar sind, um vertikale Toleranzen ausgleichen zu können, die sich aus Fertigungs- und Montagetoleranzen üblicherweise ergeben. Eine Reduzierung dieser Toleranzen auf das notwendige Maß wäre sehr teuer und bei betriebsbedingten Verformungen, beispielsweise durch Hitzeeintrag, hinfällig und nicht reparierbar. Ein weiterer besonderer Vorteil dieser Ausgestaltung ist die unabhängige und genaue Einstellbarkeit der vertikalen Spalte (6) und der Ausblasspalte (7).

Eine besonders vorteilhafte Ausgestaltung der vorliegenden Erfindung wird dadurch geschaffen, dass das Labyrinthprofil (2) von oben durch die Dichtleiste (3) vor Verschleiß geschützt ist und damit auch die verbundenen vertikalen Spalte (6), Bewegungsspalte (10) und Dichtspalte (5) vor Verschleiß geschützt sind und somit gleich bleiben.

Eine besonders vorteilhafte Ausgestaltung der vorliegenden Erfindung wird dadurch geschaffen, dass Befestigungsprofit (4) und die Dichtleiste (3) so ausgeformt sind, dass sie mit den verbundenen Rostbahnen (9) keinen Spalt bilden und somit jedwedes Eindringen von Material, welches auf der verbundenen Rostbahn (9) liegt verhindert. Auf diese Weise erübrigt sich eine pneumatische Ausblasung, noch ergeben sich andere kritische Spalte auf dieser Seite der Rostbahndichtung.

Eine besonders vorteilhafte Ausgestaltung der vorliegenden Erfindung wird dadurch geschaffen, dass die Dichtleiste (3) mittels versenkter Schrauben von oben befestigt wird. Diese Befestigung ist sehr kompakt und minimiert den Abstand zwischen den Rostbahnen (8, 9). Gleichzeitig bietet eine glatte Oberfläche der Dichtleisten (3) weniger Widerstand im Schüttgut während des angestrebten transportfreien Rückhubs und weniger Angriffsfläche für Verschleiß.

Eine besonders vorteilhafte Ausgestaltung der vorliegenden Erfindung wird dadurch geschaffen, dass das Labyrinthprofil (2) als auch die Dichtleiste (3) jeweils direkt an den Rostbahnen (1) befestigt sind und sich somit gemeinsam bei Setzungen der Rcstbahnen (1) mit absenken und dabei die Dichtspalte annäherungsweise gleich bleiben, unter der Annahme, dass der Verschleiß der Lagerungen sich ähnlich verhält. Die ständigen vor- und zurückgehenden Bewegungen führen allgemein zu einem Verschleiß in den Lagern und in den Kontaktflächen Lager zu Laufbahn.

Eine besonders vorteilhafte Ausgestaltung der vorliegenden Erfindung wird dadurch geschaffen, dass das Labyrinthprofil (2) und das Befestigungsprofil (4) jeweils nicht länger als 1 m lang sind, um Höhendifferenzen der Rostbahnen (1) auszugleichen und die jeweils einstellbaren vertikalen Spalte (6) und Ausblasspalte (7) fein genug justieren zu können.

Eine besonders vorteilhafte Ausgestaltung der vorliegenden Erfindung wird dadurch geschaffen, dass die Dichtleiste (3) Labyrinthe an ihren Stoßfugen aufweist, die diese dichten und die Dichtleisten (13) auch einzeln, ohne Demontage der anschließenden Dichtleisten (12, 14), gewechselt werden können.

Eine besonders vorteilhafte Ausgestaltung der vorlegenden Erfindung wird dadurch geschaffen, dass die Dichtung auch als Seitendichtung zwischen einer beweglichen Rostbahn (1) und dem stationären Kühlergehäuse (11) eingesetzt werden kann.

### Beschreibung der Zeichnungen.

In den Zeichnungen sind Ausführungsbeispiele der Erfindung dargestellt, die im folgenden näher beschrieben werden.

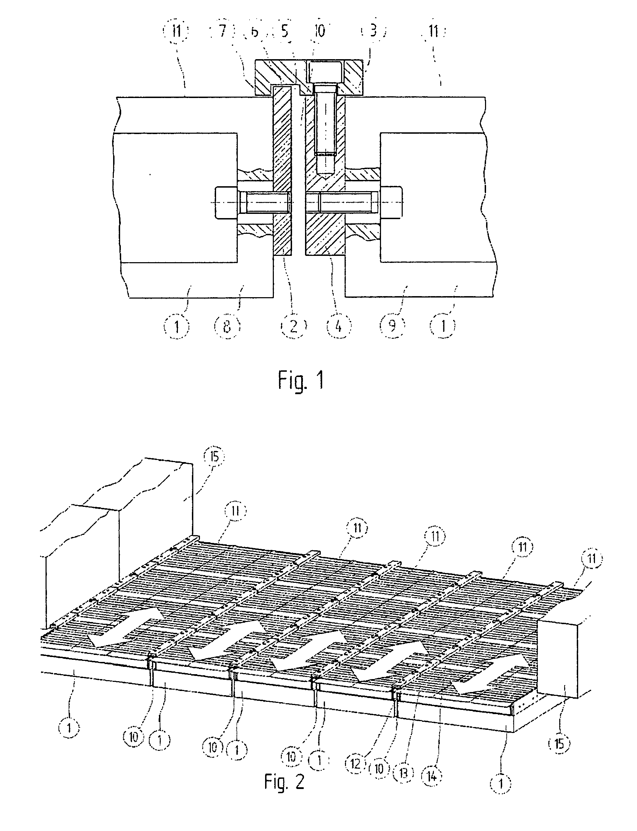

Fig. 1 zeigt einen Querschnitt durch 2 parallellaufende Rostbahnen (8, 9), wobei an Rostbahn (8) ein Labyrinthprofil (2) höheneinstellbar befestigt ist, das mit seiner Oberseite über die Rostoberfläche (11) ragt und ein Befestigungsprofil (4) , das an der Rostbahn (9) höheneinstellbar befestigt ist. Auf dem Befestigungsprofil (4) ist die Dichtleiste (3) vorzugsweise mit Senkschrauben von oben befestigt und so in der Höhe ausgerichtet, dass der Ausblasspalt (7) zum Ausblasen des Feinanteils und der Kühlluftmenge einstellbar ist. Der vertikale Dichtspalt (6) wird über das Labyrinthprofil (2)eingestellt. Die Nut an der Unterseite der Dichtleiste (3) ist so groß gewählt, wie es für den Ausgleich der Fertigungs- und Montagetoleranzen und die Wärmeausdehnungen der Rostbahnen erforderlich ist.
Fig. 2 zeigt die perspektivische Ansicht auf mehrere vor- und zurückgehende Rostbahnen (1), mit ihren den Bewegungsspalt (10) überdeckenden Dichtleisten (12, 13, 14), die auch zwischen den äußeren Rostbahnen (1) und dem Kühlergehäuse (15) eingesetzt werden.

### Bezugszeichenliste:

- 1.: Rostbahn
- 2.: Labyrinthprofil
- 3.: Dichtleiste
- 4.: Refestigungsprofil
- 5.: Dichtspalt, Dichtspalt S
- 6.: vertikaler Dichtspalt, vertikaler Dichtspalt V
- 7.: Ausblasspalt, Ausblasspalt A
- 8.: Rostbahn links
- 9.: Rostbahn rechts
- 10.: Bewegungsspalt
- 11.: Rostoberfläche
- 12.: Dichtleisten
- 13.: Dichtleiste
- 14.: Dichtleiste
- 15.: Kühlerseitenwand

## Patentansprüche

1. Eine durchfallfreie Dichtung im Bewegungsspalt (10) zwischen den in Förderrichtung vor- und zurückgehenden Rostbahnen (1) eines Kühlrostes, bestehend aus einer Kombination einer Labyrinthdichtung und Ausblasdichtung, **dadurch gekennzeichnet, dass** ein Labyrinthprofil (2) an der Rostbahn (8) angebracht ist und ein Befestigungsprofil (4) an der im Bewegungsspalt zugewandten Rostbahn (9) angebracht ist, an welchem eine Dichtleiste (3) von oberhalb der Rostfläche mittels Versenkter Schrauben befestigt ist, die an ihren jeweiligen Stoßfugen so zu einem dichtenden Labyrinth ausgeformt ist, dass sie auch einzeln ohne Demontage der anschließenden Dichtleiste gewechselt werden kann und die das Labyrinthprofil (2) überdeckt und zwischen dem Labyrinthprofil (2) und der Dichtleiste (3) ein vertikaler Dichtspalt (6) und zwischen Dichtleiste (3) und der Rostoberfläche ein Ausblasspalt (7) aufweist, wobei der Dichtspalt (5) mindestens die 2-fache Spaltgröße aufweist wie der Ausblasspalt (7).

2. Eine durchfallfreie Dichtung nach Anspruch 1, **dadurch gekennzeichnet, dass** das Labyrinthprofil (2) höheneinstellbar ist, um den vertikalen Spalt (6) einstellbar zu machen.

3. Eine durchfallfreie Dichtung nach Anspruch 1, **dadurch gekennzeichnet, dass** das Labyrinthprofil (2) von oben durch das Dichtprofil (3) geschützt, aber nicht berührt wird.

4. Eine durchfallfreie Dichtung nach Anspruch 1, **dadurch gekennzeichnet, dass** das Befestigungsprofil (4) höheneinstellbar ist, um den Ausblasspalt (7) einstellbar zu machen.

5. Eine durchfallfreie Dichtung nach Anspruch 1, **dadurch gekennzeichnet, dass** das Befestigungsprofil (4) und die Dichtleiste (3) so ausgeformt sind, dass sie mit den verbundenen Rostbahnen (9) keinen Spalt bilden, der zu Rostdurchfall führen kann.

6. Eine durchfallfreie Dichtung nach Anspruch 1, **dadurch gekennzeichnet, dass** die Dichtleiste (3) von oberhalb der Rostfläche (11) mit Senkschrauben befestigt ist, um den Bewegungsspalt (10) so gering wie möglich zu halten und eine leichte Wartungsmöglichkeit von oben zu ermöglichen.

7. Eine durchfallfreie Dichtung nach Anspruch 1, **dadurch gekennzeichnet, dass** die Dichtelemente (2, 3, 4) ausschließlich an den beweglichen Rostbahnen (1) befestigt sind und sich somit verschleißbedingten vertikalen Setzungen der Rostbahnen anpassen.

8. Eine durchfallfreie Dichtung nach Anspruch 1, **dadurch gekennzeichnet, dass** das Labyrinthprofil (2) und Befestigungsprofil (4) jeweils nicht länger als 1m lang sind, um Höhendifferenzen der Rostbahnen (1) ausgleichen zu können.

9. Verfahren zum Kühlen und durchfallfreiem Dichten mittels der Dichtung von Anspruch 1 einer auf einem Förderrost liegenden Schüttgutschicht, wobei der Förderrost aus in Förderrichtung vor- und zurückgehenden Rostbahnen (1) eines Kühlrostes gebildet wird und Kühlluft durch den Bewegungsspalt (10) zwischen den Rostbahnen (1) ins Schüttgut durch eine Labyrinthdichtung eingeblasen wird, **dadurch gekennzeichnet, dass** die Labyrinthdichtung (2) verschleißfrei von einer oberhalb liegenden Dichtleiste (3) geschützt ist und die Labyrinthdichtung (2) mindestens die 2-fache horizontale Spaltgröße (5) gegenüber der vertikalen Spaltgröße aufweist (6, 7).

10. Verfahren nach Anspruch 11, **dadurch gekennzeichnet, dass** die Dichtelemente (2, 3, 4) ausschließlich an den beweglichen Rostbahnen (1) befestigt sind und sich somit verschleißbedingten vertikalen Setzungen der Rostbahnen (1) anpassen und die Kühlluftmenge gleich bleibt.

11. Verfahren nach Anspruch 11, **dadurch gekennzeichnet, dass** das Befestigungsprofil (4) höheneinstellbar an der Rostbahn (9) befestigt ist, um den Ausblasspalt (7) und somit die Kühlluftmenge justieren zu können.

12. Verfahren nach Anspruch 11, **dadurch gekennzeichnet, dass** das Befestigungsprofil (4) dichtend an der Rostbahn (9) befestigt ist, um Rostdurchfall zwischen der Dichtleiste (3) und der Rostbahn (9) zu verhindern.

## Claims

1. A non-flunking seal in the movement gap (10) between the grate tracks (1) of a cooling grate moving forward or backward in the conveying direction consisting of a combination of a labyrinth seal and a blow-out seal **characterised in that** a labyrinth profile (2) is attached to the grate track (8) and a fastening profile (4) is attached to the grate track (9) facing inside the movement gap in which a sealing strip (3) is fixed from above the grate surface by means of countersunk screws which are shaped at their respective joints forming a sealing labyrinth such that it can be replaced even individually without the removal of the adjacent sealing strip and covers the labyrinth profile (2) and between the labyrinth profile (2) and the sealing strip (3), it features a vertical sealing gap (6) and between the sealing strip (3) and the grate surface a blow-out gap (7), wherein the sealing gap (5) is at least 2 times the size of the blow-out gap (7).

2. The non-flunking seal according to claim 1, **characterised in that** the labyrinth profile (2) is adjustable in height to make the vertical sealing gap (6) adjustable.

3. The non-flunking seal according to claim 1, **characterised in that** the labyrinth profile (2) is protected from above by the sealing strip (3), but is not in contact.

4. The non-flunking seal according to claim 1, **characterised in that** the fastening profile (4) is adjustable in height in order to make the blow-out gap (7) adjustable.

5. The non-flunking seal according to claim 1, **characterised in that** the fastening profile (4) and the sealing strip (3) are formed such that they do not form a gap with the connected grate track (9), which can lead to grate flunking.

6. The non-flunking seal according to claim 1, **characterised in that** the sealing strip (3) is fastened from above the grate surface (11) with countersunk screws to keep the movement gap (10) as small as possible and to allow easy maintenance access from the top.

7. The non-flunking seal according to claim 1, **characterised in that** the sealing elements (2, 3, 4) are fixed only on movable grate tracks (1) and thus adjust to the wear-related vertical settling of the grate tracks.

8. The non-flunking seal according to claim 1, **characterised in that** the labyrinth profile (2) and the fastening profile (4) are not greater than 1 meter in length, to compensate for height differences of the grate tracks (1).

9. A method of cooling and non-flunked sealing by means of the seal of claim 1 of a layer of bulk material lying on a conveyor grate, wherein the conveying grate is formed of grate tracks (1) moving forward and backward in the conveying direction and cooling air blown through the movement gap (10) between the grate tracks (1) into the bulk material by means of a labyrinth seal, **characterised in that** the labyrinth profile (2) is protected wear-free by a sealing strip (3) above and the labyrinth profile (2) has at least twice the size of the horizontal sealing gap (5) with respect to the size of the vertical sealing gap (6, 7).

10. The method according to claim 11, **characterised in that** the sealing elements (2, 3, 4) are exclusively fastened on the movable grate tracks (1) and as such adapt to the wear-related vertical settling of the grate tracks (1) and the amount of cooling air remains the same.

11. The method according to claim 11, **characterised in that** the fastening profile (4) is fastened on the grate track (9) with adjustable height to be able to adjust the blow-out gap (7) and thus to be able to adjust the amount of cooling air.

12. The method according to claim 11, **characterised in that** the fastening profile (4), is fastened in a sealing manner on the grate track (9) to prevent the grate track from flunking between the sealing strip (3) and the grate track (9).

## Revendications

1. Joint sans chute à travers situé dans l'interstice de mouvement (10) entre les pistes (1) à grille d'une grille de refroidissement, avançant et reculant dans le sens de convoyage, le joint étant composé de la combinaison d'un joint à labyrinthe et d'un joint de soufflage, **caractérisé en ce qu'**un profilé à labyrinthe (2) est fixé contre la piste à grille (8) et qu'un profilé de fixation (4) est fixé contre la piste à grille (9) le regardant dans l'interstice de déplacement, interstice contre lequel un bandeau d'étanchéité (3) est fixé au-dessus de la surface de la grille au moyen de vis rentrées, qui au niveau de ses joints d'aboutement respectifs est modelé en labyrinthe étanchéisant de telle manière qu'il soit possible de le changer individuellement sans devoir démonter le bandeau d'étanchéité suivant, et qui recouvre le profilé à labyrinthe (2) et présente un interstice d'étanchéité (6) vertical entre le profilé à labyrinthe (2) et le bandeau d'étanchéité (3), et un interstice de soufflage (7) entre le bandeau d'étanchéité (3) et la surface de la grille, sachant que l'interstice d'étanchéité (5) est au moins 2 fois plus important que l'interstice de soufflage (7).

2. Joint sans chute à travers selon la revendication 1, **caractérisé en ce que** le profilé à labyrinthe (2) est réglable en hauteur pour rendre l'interstice vertical (6) réglable.

3. Joint sans chute à travers selon la revendication 1, **caractérisé en ce que** le profilé à labyrinthe (2) est protégé par le haut par le profilé d'étanchéité (3) sans être en contact avec ce dernier.

4. Joint sans chute à travers selon la revendication 1, **caractérisé en ce que** le profilé de fixation (4) est réglable en hauteur pour rendre l'interstice de soufflage (7) réglable.

5. Joint sans chute à travers selon la revendication 1, **caractérisé en ce que** le profilé de fixation (4) et le bandeau d'étanchéité (3) sont modelés de manière à ne pas former d'interstice, avec les pistes à grilles (9) reliées, susceptible d'entraîner une chute de grille.

6. Joint sans chute à travers selon la revendication 1, **caractérisé en ce que** le bandeau d'étanchéité (3) est fixé, depuis un endroit situé au-dessus de la surface (11) de la grille, à l'aide de vis à tête fraisée pour maintenir l'interstice de mouvement (10) aussi faible que possible et permettre une maintenance facile par le haut.

7. Joint sans chute à travers selon la revendication 1, **caractérisé en ce que** les éléments étanchéisants (2, 3, 4) sont fixés exclusivement contre les pistes mobiles (1) à grilles et qu'ils s'adaptent ainsi aux tassements verticaux de ces pistes dus à l'usure.

8. Joint sans chute à travers selon la revendication 1, **caractérisé en ce que** le profilé à labyrinthe (2) et le profilé de fixation (4) ne mesurent chacun pas plus d'un mètre de long pour compenser les différences de hauteur des pistes (1) à grilles.

9. Procédé pour refroidir et étanchéiser, sans chute à travers, au moyen du joint selon la revendication 1, une couche de produit en vrac reposant sur une grille convoyeuse, sachant que la grille convoyeuse se compose de pistes (1) à grilles d'une grille de refroidissement avançant et reculant dans le sens de convoyage, et que l'air de refroidissement est injecté dans le produit en vrac à travers un joint à labyrinthe, par l'interstice de mouvement (10) entre les pistes (1) à grilles, **caractérisé en ce que** le joint à labyrinthe (2) est protégé de l'usure par un bandeau d'étanchéité (3) horizontal situé au-dessus, et que le joint à labyrinthe (2) présente une taille d'interstice (5) horizontal au moins deux fois plus importante que la taille d'interstice (6, 7) vertical.

10. Procédé selon la revendication 11, **caractérisé en ce que** les éléments étanchéisants (2, 3, 4) sont fixés exclusivement contre les grilles mobiles (1) et qu'ils s'adaptent ainsi aux tassements des pistes (1) à grilles dus à l'usure et que le débit d'air de refroidissement demeure le même.

11. Procédé selon la revendication 11, **caractérisé en ce que** le profilé de fixation (4) est réglable en hauteur contre la piste (9) à grilles pour pouvoir ajuster l'interstice de soufflage (7), donc le débit d'air de refroidissement.

12. Procédé selon la revendication 11, **caractérisé en ce que** le profilé de fixation (4) est fixé de manière étanchéisante contre la piste (9) à grilles pour empêcher une chute de grille entre le bandeau d'étanchéité (3) et la piste (9) à grilles.
